# FASCICULE DE BREVET EUROPEEN

(11) **EP 0 756 044 B1**
(45) Date de publication et mention de la délivrance du brevet: **02.11.2005**
(21) Numéro de dépôt: 96420248.5
(22) Date de dépôt: 24.07.1996
(51) Int. Cl.: E04B 2/74, E04F 13/08, E04F 19/06, F16B 5/00

(54) **Système d'agencement intérieur à dispositif d'accrochage invisible pour panneaux ou plaques de parement**
System zur Innenanordnung für eine unsichtbare Befestigungsvorrichtung von Platten oder Verblendungsplatten
System for interior arrangement or invisible fastener device for panels or facing panels

(30) Priorité: 24.07.1995 FR 9509182
(43) Date de publication de la demande: 29.01.1997
(73) Titulaire: BRIOUDE FABRICATION Société Anonyme, 07201 Aubenas Cedex (FR)
(72) Inventeur: Brioude, Yvon, 07200 Aubenas (FR)
(74) Mandataire: Thibault, Jean-Marc

(56) Documents cités:
- EP-A- 0 302 564
- DE-A- 2 328 233
- DE-C- 3 814 183
- US-A- 4 881 844

## Description

L'invention concerne le domaine technique de l'agencement de l'espace intérieur des bâtiments, relatif notamment à l'érection de parois ou de cloisons préfabriquées et/ou d'ensembles de rangement ou de présentation.

L'invention intéresse, plus particulièrement, le domaine des cloisons préfabriquées démontables et déplaçables par opposition aux cloisons érigées selon des méthodes traditionnelles de maçonnerie et de plâtrerie, dont le déplacement implique une destruction complète suivie d'une reconstruction à partir de matériaux neufs.

En effet, les cloisons préfabriquées démontables présentent l'avantage d'être conçues pour pouvoir être déplacées sans gros travaux et sans intervention d'un personnel spécialement qualifié.

L'art antérieur propose de nombreux systèmes de cloisons préfabriquées parmi lesquels il est possible de retenir les systèmes de cloisons préfabriqués comprenant une structure porteuse formée de lices profilées en U, fixées au sol et au plafond, et de montants fixés sur les lices. Les lices et les montants définissent ainsi des cadres à l'intérieur desquels ou sur lesquels sont rapportés des panneaux formant le corps de la cloison.

Chacun de ces panneaux peut être soit monobloc, comportant alors deux plaques de parement liées par une épaisseur d'un matériau isolant, soit constitué d'une ou deux plaques de parement amovibles rapportées de part et d'autre d'un cadre de la structure porteuse.

L'invention porte plus précisément, sur les systèmes de cloisons préfabriqués de ce dernier type qui présentent l'avantage de délimiter, entre les plaques de parement indépendantes ou panneaux, des cavités susceptibles de recevoir un matériau de remplissage et d'accueillir des canalisations de communication ou de transport d'énergie.

Toutefois, l'art antérieur ne propose pas de dispositifs offrant une réelle facilité de montage et de démontage des panneaux après installation de la cloison, en vue notamment d'un passage de câbles ou d'un changement du matériau de remplissage. Il apparaît donc le besoin de disposer de systèmes d'accrochage permettant de rendre facilement amovibles les panneaux ou plaques de parement.

Le document DE 38 14 183 décrit un dispositif d'accrochage apportant un premier élément de solution à ce problème. Ce dispositif est constitué, d'une part, d'un bouton à tête saillante en forme de diabolo porté par une structure porteuse et, d'autre part, d'un contre-bouton, fixé sur le panneau, offrant une section de passage pour la tête en vue de l'engagement du bouton dans un berceau d'accrochage. Lors de sa mise en oeuvre. Un tel dispositif maintient à distance le panneau de la structure porteuse et ne permet pas un blocage fiable de l'accrochage, de sorte qu'il existe des risques de vibrations des panneaux sur la structure porteuse.

Un premier objet de l'invention vise donc à offrir un système de cloison présentant une grande simplicité de montage avec un accrochage invisible amovible de panneaux sur une structure porteuse, tout en offrant un assemblage sans jeu. Un autre but de l'objet de l'invention est d'offrir un système de cloison permettant une pose et une dépose rapides du panneau.

Afin d'atteindre les objectifs ci-dessus, un objet de l'invention concerne un système de cloison ou d'agencement intérieur tel que visé par la revendication 1.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une perspective d'un système de cloison préfabriquée selon l'invention.
La **fig. 2** est une perspective éclatée d'un dispositif d'accrochage selon l'invention.
La **fig. 3** est une coupe partielle selon la ligne III-III du système de cloison selon l'invention.
La **fig. 4** est une perspective d'un élément de structure selon l'invention.
La **fig. 5** est une coupe selon les lignes V-V de l'élément de structure.
La **fig. 6** est une coupe partielle selon la ligne VI-VI du système de cloison.
La **fig. 7** est une perspective éclatée montrant la mise en place d'un dispositif d'accrochage selon une variante de l'invention.
La **fig. 8** est une élévation d'une variante du dispositif vue selon le plan VIII-VIII.

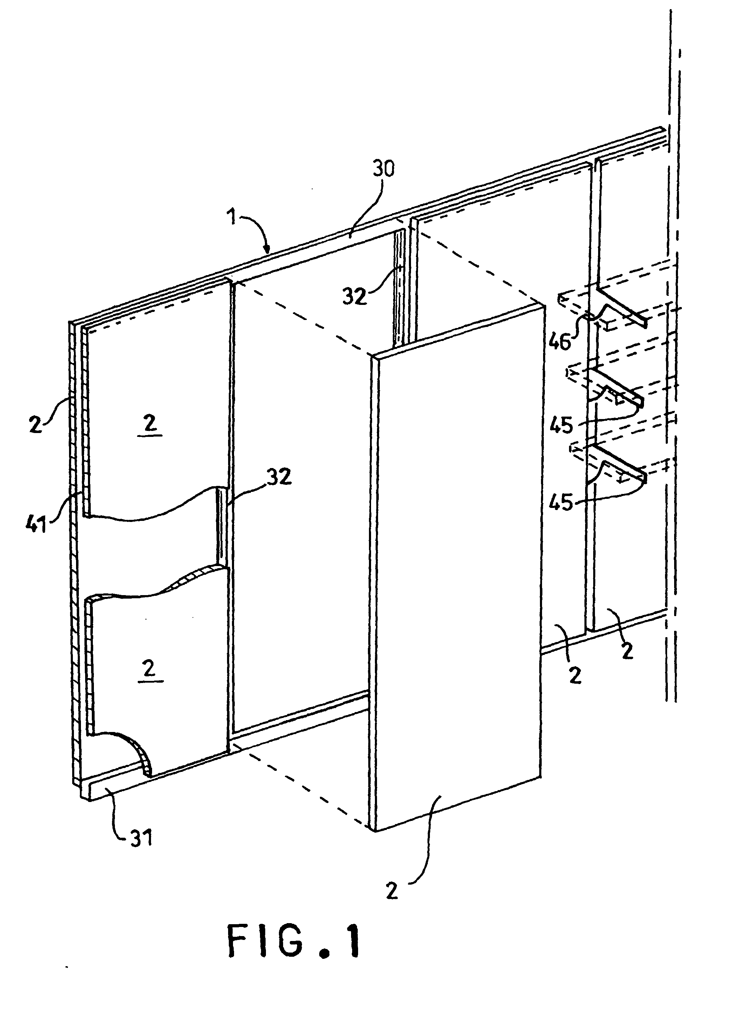

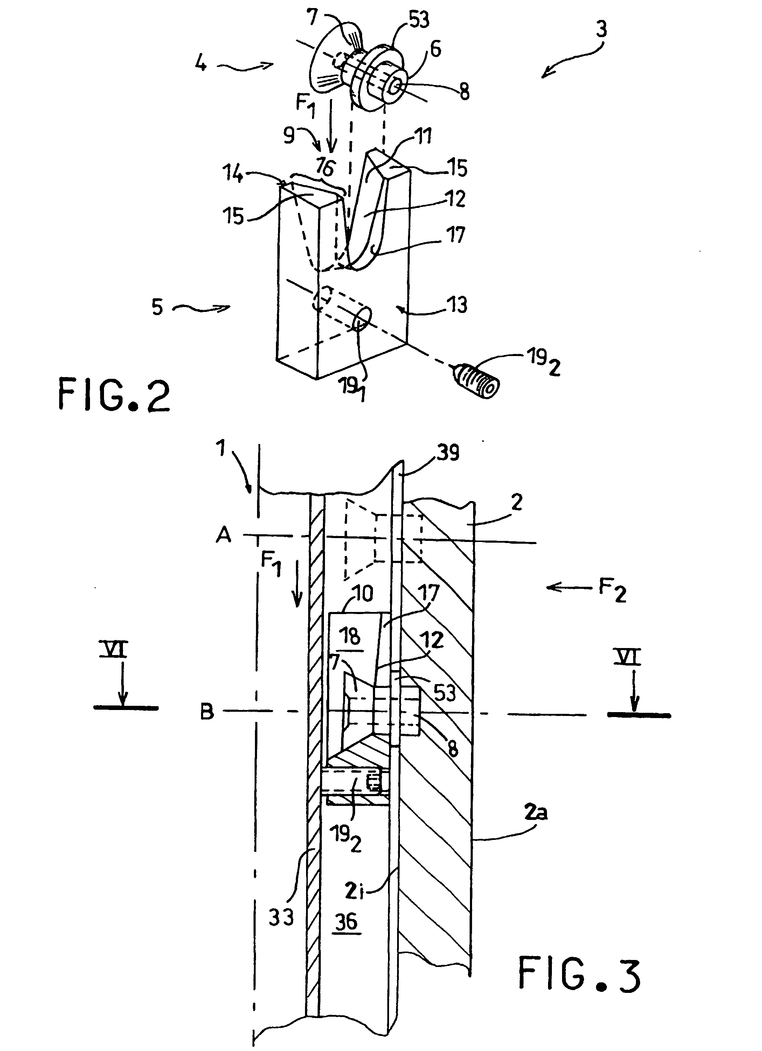

Comme cela apparaît à la **fig. 1**, la cloison préfabriquée selon l'invention est constituée d'une structure porteuse désignée dans son ensemble par la référence **1**, de part et d'autre de laquelle sont accrochés des panneaux **2** formant deux faces de la cloison. Ces panneaux **2**, présentant une faible épaisseur par rapport à celle de la cloison, peuvent être réalisés de toute façon appropriée connue de l'homme du métier. Selon un mode de réalisation préféré des panneaux, ceux-ci sont constitués par des plaques de bois mélaminées ou stratifiées sur l'une au moins de leurs faces **2a**, dont les chants présentent une finition du type bandeau PVC ou analogue. Selon l'invention, chaque panneau **2** est fixé sur la structure porteuse **1** à l'aide de dispositifs d'accrochage **3**, tels qu'illustrés à la **fig. 2**.

Chaque dispositif d'accrochage **3** est formé de deux éléments, à savoir un bouton **4** et un contre-bouton **5** fixés sur, respectivement, le panneau et la structure porteuse **1** ou inversement. Le bouton est formé d'un corps **6** prolongé par une tête saillante **7** et pourvu de moyens d'ancrage **8** pour assurer sa fixation sur une face interne **2**_{**i**} du panneau **2**, comme illustré à la **fig. 3**, étant entendu qu'il est possible de le fixer sur la structure porteuse **1**. De manière préférée, le corps **6** présente une forme cylindrique et la tête une forme tronconique sensiblement coaxiales. Dans l'exemple illustré, les moyens d'ancrage **8** sont réalisés sous la forme d'un perçage axial traversant **8** destiné à recevoir une vis à tête fraisée. Les moyens d'ancrage peuvent aussi être constitués par une platine de fixation, non représentée, prolongeant le corps **6** à l'opposé de la tête **7**.

Selon la variante illustrée, le contre-bouton **5** est destiné à être fixé sur la structure porteuse **1**, de manière à recevoir le bouton **4**, afin d'assurer une suspension sans jeu du panneau **2** sur la structure. Le contre-bouton **5** est aménagé pour présenter un berceau de réception **9** délimitant une section de passage **10** pour la tête **7** du bouton, de façon à permettre un engagement du corps **6** dans le berceau **9**, selon une direction verticale. Le berceau **9** forme, par son fond, une butée pour le corps **6** dans le sens d'engagement vertical, illustré par la flèche **f**_{**1**} de la **fig. 2**. Le contre-bouton **5** dispose de moyens de retenue **11** du bouton, adaptés pour maintenir suspendu le panneau sur la structure porteuse. L'ensemble des moyens ci-dessus permettant d'assurer la fonction de suspension, le contre-bouton **5** est, selon une caractéristique de l'invention, pourvu d'une rampe de coincement **12** permettant d'assurer le blocage de l'accrochage par un rapprochement du panneau vers la structure porteuse dans le sens de la flèche **f**_{**2**} de la **fig. 3**.

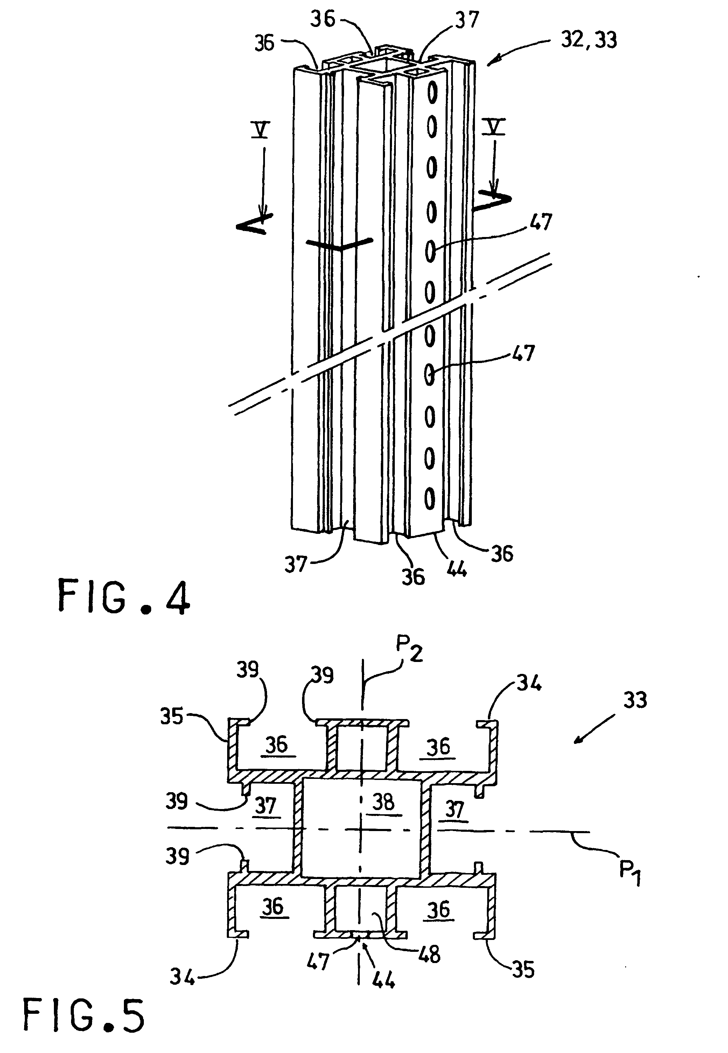

La **fig. 4** illustre un premier exemple de réalisation d'un contre-bouton **5** constitué sous la forme d'un bloc parallélépipèdique. Le contre-bouton **5** présente une entaille délimitant, entre une face avant **13** et une face arrière **14** opposée, un berceau en U ou en V **9** comportant deux branches symétriques **15**. Le berceau possède une paroi interne **16** aménagée pour délimiter la rampe de coincement **12** présentant une inclinaison dans le sens d'un éloignement par rapport à la face avant **13** en direction du fond du berceau. La rampe **11** est prolongée en direction de la face arrière **14** par les moyens de retenue **11** du bouton **4**.

De manière préférée, la rampe de coincement **12** est délimitée par une partie de la paroi interne **16** définie par une surface **17** ménagée à partir de et orthogonalement à la face avant **13**. Cette surface orthogonale **17** présente alors une largeur qui augmente de l'extrémité de chacune des deux branches **15** vers le fond du berceau **9**. La rampe **12** est enfin prolongée par une surface divergente **11** en direction de la face arrière **14**.

La surface divergente **11** définit une paroi d'un logement **18** de réception de la tête du bouton **7** et offre des moyens de retenue du bouton par épaulement de la tête. De manière avantageuse, le logement **18** présente une section droite transversale de forme homothétique à une section axiale de la tête du bouton **7**. Le contre-bouton **5** comporte, de plus, des moyens de fixation **19** sur la structure porteuse.

Dans l'exemple illustré, la structure porteuse **1** est composée de lices, haute **30** et basse **31**, fixées respectivement au plafond et au sol d'un local dont l'espace doit être agencé et de montants **32** rapportés sur les lices **30**, **31**. De manière préférée, les lices **30**, **31** sont réalisées sous la forme de profilés en U, à l'intérieur desquels sont fixées les extrémités des montants **32**.

Selon une caractéristique avantageuse de l'invention, les montants **32** assurent la réception du contre-bouton **5** du dispositif d'accrochage. A cette fin, chaque montant est formé par un profilé rectiligne **33**. Ce profilé **33** présente une section droite transversale de forme rectangulaire, à partir de laquelle il est possible de distinguer deux faces dites longitudinales **34**, parallèles, symétriques par rapport à un plan de référence **P**_{**1**} et deux faces dites transversales **35**, parallèles, symétriques par rapport à un plan transversal médian **P**_{**2**} perpendiculaire au plan de référence **P**_{**1**}.

De manière préférée, chaque face longitudinale **34** présente deux saignées **36** s'ouvrant vers l'extérieur ménagées à égale distance du plan transversal **P**_{**2**}. De préférence mais non exclusivement, chaque face transversale **35** est pourvue d'une gorge **37** ménagée symétriquement au plan de référence **P**_{**1**}.

Selon un mode de réalisation, le profilé possède une section droite transversale correspondant à une demi-section par rapport au plan médian **P**_{**2**} de la forme préférée du profilé, telle que montrée à la **fig. 3**. Le profilé ne comporte alors que deux saignées **36** symétriques et opposées sur ces deux faces longitudinales **34** et une gorge **37** sur l'une au moins de ses faces transversales **35** .

Le profilé **33** peut être réalisé en tout matériau et selon tout procédé connu de l'homme de métier, notamment par usinage d'un bloc massif de matière naturelle du type bois, ou synthétique du type PVC, ou encore par extrusion d'aluminium ou de matière plastique. Selon le dernier mode de fabrication cité, le profilé **33** définit avantageusement au moins un caisson fermé **38** assurant une fonction de boite anti-torsion.

Comme cela a été précisé plus haut, le profilé **33** est destiné à constituer des éléments, tels que des traverses ou, de manière préférée, des montants **32** d'une structure porteuse **1** pour une cloison préfabriquée selon l'invention. Pour des raisons qui apparaîtront dans la suite de la description, les profilés **33** formant les montants sont montés dans les lices **30, 31**, de façon que leurs faces longitudinales **34** soient orientées parallèlement aux faces de la cloison de sorte que les faces transversales **35** sont orientées vers l'intérieur de la cloison. Les faces transversales **35** présentent alors une largeur sensiblement égale à la largeur interne des lices **30, 31**. Les gorges **37** de ces faces transversales **35** sont mises à profit pour fixer les profilés **33** dans les lices **30, 31** au moyen d'équerres ou analogues et pour adapter sur la structure porteuse **1** différents éléments complémentaires du type huisserie de porte, de fenêtre ou analogue.

Sur les faces longitudinales **34** du profilé **33**, les saignées **36** possèdent comme fonction essentielle d'offrir des guides de mise en place et de fixation pour les dispositifs d'accrochage **3** des panneaux **2** de la cloison préfabriquée.

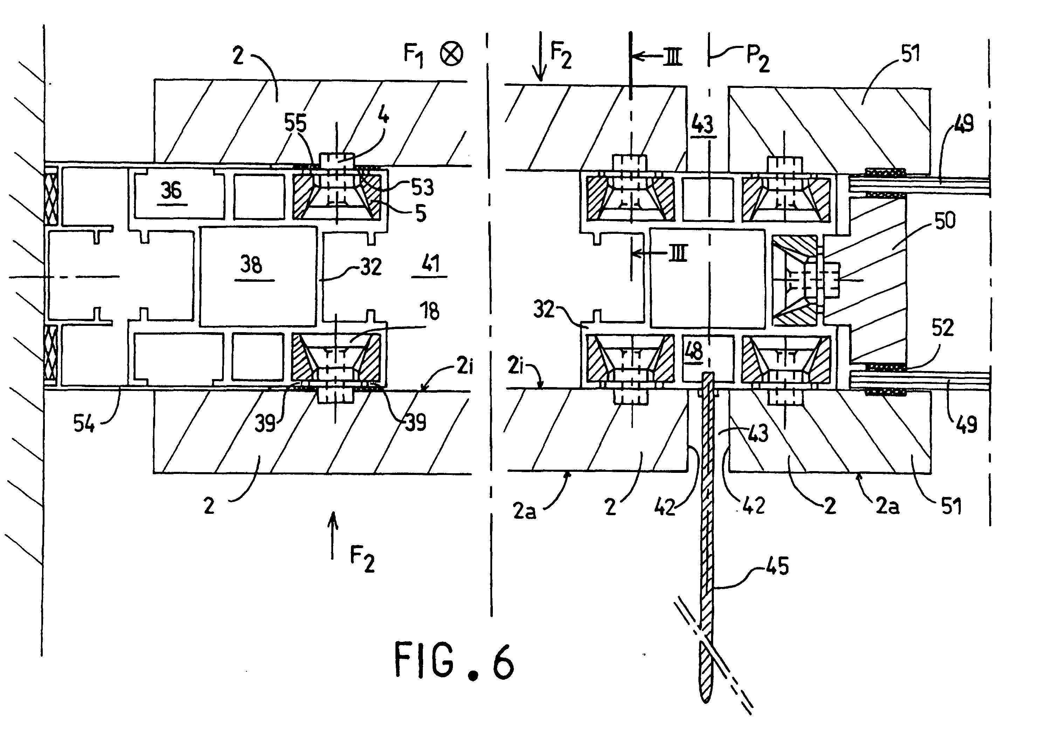

De manière préférée, les saignées **36** et les gorges **37** présentent une section droite transversale en C comportant deux épaulements **39** orientés en direction l'un de l'autre, délimitant ensemble une ouverture d'entrée de plus faible section que la saignée. Lorsque les saignées **36** sont ainsi réalisées, les contre-boutons **5** sont engagés, soit avant le montage des montants **32**, soit au moyen de boutonnières ménagées dans les épaulements **39** des saignées. Les moyens de fixation **19** du contre-bouton **5**, dans une telle saignée **36**, sont constitués d'un taraudage traversant **19**_{**1**} dans lequel est engagée une vis de pression **19**_{**2**}, tel que cela apparaît à la **fig. 2**. Cette vis **19**_{**2**} est apte à exercer une pression sur le fond de la saignée **36**, de sorte que la face avant **13** du contre-bouton **5** est plaquée sur les épaulements de la saignée, comme montré à la **fig. 6**. Ce mode de réalisation présente l'avantage de permettre de façon rapide, un montage et un réglage en position du contre-bouton **5**.

Le montage d'une cloison conforme à l'invention, à partir des différents éléments décrits plus haut, est effectué en procédant de la manière suivante. Tout d'abord, la structure porteuse **1** est mise en place à partir de lices et de montants **32** formés de tronçons de profilés **33**. Cette structure **1** comporte alors n + 1 montants **32**, n étant égal au nombre de panneaux par face de cloison. Après le montage préliminaire de la structure porteuse **1**, il est procédé à l'accrochage de chaque panneau **2** individuellement. Cet accrochage étant réalisé de la même façon pour tous les panneaux **2**, il ne sera décrit en détail que pour un panneau **2**.

Le panneau **2** est accroché sur deux montants **32** consécutifs au moyen d'au moins deux et, de préférence, quatre dispositifs d'accrochage **3**. Les contre-boutons **5** sont fixés dans les deux saignées les plus proches des deux montants **32**, face avant **13** orientée vers l'extérieur de la cloison.

Dans un même temps, les boutons **4** sont mis en place sur les panneaux **2**. Pour ce faire et de manière préférée, des trous borgnes de même diamètre que le corps **6** sont percés dans les faces internes **2**_{**i**} des panneaux **2**. Les boutons **4** sont alors introduits dans ces trous de manière à y encastrer partiellement le corps **6**. Les boutons **4** sont enfin immobilisés au moyen de vis d'ancrage à tête fraisée, engagées dans le perçage axial **8**. Les quatre boutons **4** sont disposés de façon à coïncider avec les quatre contre-boutons **5** et à assurer un centrage relatif du panneau **2** par rapport aux deux saignées d'accrochage **36**. Le panneau présente alors une largeur inférieure à la distance séparant les deux plans médians **P**_{**2**} des deux montants **32** et une hauteur inférieure à la hauteur sous plafond du local de montage de la cloison. Pour la pose du panneau **2**, celui-ci est positionné de manière à présenter les boutons **4** à l'intérieur des deux saignées **36** au-dessus des contre-boutons dans une position notée A, en pointillés, sur la **fig. 3**. Puis le panneau **2** est descendu selon la direction et le sens de la flèche **f**_{**1**}, pour engager les boutons **4** dans les berceaux des contre-boutons **5** jusqu'à une position B. Lors de cet engagement, la tête **7** de chaque bouton coopère avec la rampe de coincement **12** du contre-bouton **5** correspondant. Cette rampe **12** exerce alors une traction sur la tête du bouton **7** dans le sens de flèche **f**_{**2**} et plaque le panneau **2** contre les deux montants **32**. Par effet de coin, il y a blocage de la liaison dans le sens d'un rapprochement du panneau **2** vers la structure porteuse **1**, sous l'action du poids du panneau **2** dont l'immobilisation ne nécessite pas d'autre intervention. De manière avantageuse, le panneau **2** ainsi accroché dissimule les deux saignées **36** et les dispositifs d'accrochage **3** qui sont, de ce fait, invisibles.

Une cloison élémentaire selon l'invention est constituée de deux faces de panneaux ainsi suspendus. Chaque couple de panneaux **2**, fixé de part et d'autre de deux montants **32**, délimite un compartiment **41** de la cloison. Un tel compartiment **41** peut éventuellement recevoir un matériau d'isolation phonique ou thermique et accueillir des canalisations ou câbles de fonctions diverses. Un avantage de l'invention est de permettre, grâce aux dispositifs d'accrochage **3**, un accès rapide à l'intérieur des compartiments **41** de la cloison par simple décrochage de l'un au moins des panneaux **2** les fermant. De plus, le mode de fixation des boutons leur confère avantageusement une grande résistance aux montages et démontages successifs en raison, notamment, de la reprise des efforts tranchants par le corps **6** encastré dans le panneau sans sollicitation excessive de la vis d'ancrage engagée dans le perçage **8**.

Selon une variante de montage préférée, les côtés contigus de deux panneaux consécutifs d'une même face ne sont pas en contact, de sorte que leurs chants **42** sont visibles. Cette disposition de l'invention offre la possibilité d'un effet décoratif rendu par une alternance de couleurs entre les façades **2a** des panneaux **2**, leurs chants **42** et les montants, dont une partie des faces longitudinales **34** reste apparente, comme l'illustre plus particulièrement la **fig. 6**. Il est donc possible, grâce à cette variante de montage, de ne pas recourir à des couvre-joints pour assurer une finition esthétique de la cloison. L'espace ainsi disponible **43**, entre les deux panneaux **2**, peut présenter une ou plusieurs crémaillères d'accrochage **44** pour des accessoires de présentation ou de rangement. De manière avantageuse, ces crémaillères **44** sont intégrées au profilé **33**. L'une au moins des faces longitudinales **34** présente alors une succession rectiligne de lumières **47** oblongues, symétriques par rapport au plan médian **P**_{**2**}, débouchant dans un caisson fermé latéral **48** du profilé. Chacune de ces lumières **47** est apte à recevoir des ergots d'accrochage d'accessoires divers, selon un montage connu de l'homme de métier. La **fig. 1** montre, à titre d'exemple, des équerres **45** accrochées sur de telles crémaillères. Ces équerres **45** supportent des étagères **46** représentées en pointillés.

L'objet de l'invention concerne également une cloison dont certains panneaux sont formés par des vitres **49** ou analogues, tel que cela est illustré à la **fig. 6**. Ces vitres **49** sont alors disposées entre deux montants **32** et pincées, au niveau de chaque montant **32** entre, d'une part, une entretoise **50** fixée dans une gorge **37** d'une face transversale **35**, au moyen du dispositif d'accrochage **3** et, d'autre part, une parclose **51** accrochée comme les panneaux dans une saignée du même montant. Afin d'assurer un meilleur maintien des vitres **49**, il peut être interposé entre chaque vitre **49** et la parclose **51**, ainsi qu'entre la vitre **49** et l'entretoise **50**, des garnitures ou joints **52** élastiquement déformables.

Le dispositif d'accrochage selon l'invention peut aussi être utilisé pour l'accrochage de panneaux de parement sur un mur, le contre-bouton **4** étant alors fixé directement sur ce mur.

Enfin, le mode d'utilisation des dispositifs d'accrochage **3** a été décrit en fixant le contre-bouton **5** sur la structure porteuse **1**, berceau **9** orienté vers le haut, et le bouton **4** sur le panneau. Toutefois, il est possible d'utiliser le même dispositif en fixant le bouton **4** sur la structure porteuse **1** et le contre-bouton **5** sur le panneau **2**, berceau **9** orienté vers le bas. De même, le dispositif d'accrochage a été décrit en ménageant la rampe de coincement sur le contre-bouton. Un aménagement de cette rampe **12** sur la tête **7** du bouton permettrait de remplir la même fonction de blocage. De même, le bouton **4** a été décrit comme ayant, de manière préférée, le corps **6** partiellement encastré dans le panneau **2**, mais le bouton **4** pourrait tout aussi bien être appliqué contre le panneau pour y être ancré par une vis engagée dans le perçage **8** sans encastrement du corps **6**. Enfin, le bouton **4** et le contre-bouton **5** ont été décrits comme étant rapportés sur la structure porteuse ou le panneau, mais ils pourraient être directement ménagés dans la masse de leurs supports.

Selon une variante de réalisation préférée du bouton **4**, le corps **6** de ce dernier présente une collerette de butée **53** située à une distance de la tête **7** inférieure à la distance maximale existant entre la rampe de coincement **12** et la face avant **13** du contre-bouton **5** ou, encore, inférieure à la largeur maximale de la surface orthogonale **17** définissant la rampe de coincement **12**. La collerette **53** présente, de plus, une même épaisseur que les épaulements **39** de la saignée, de sorte qu'elle assure une fonction de réglage de l'écartement entre la tête du bouton **7** et le panneau **2**, de façon à garantir un appui du panneau sur les montants et un assemblage sans jeu. De plus, la collerette **53** définit avantageusement la profondeur d'encastrement du corps **6** dans le panneau **2** portant le bouton **4**.

Lorsque, comme le montre la **fig. 6**, le dispositif d'accrochage **3** est monté sur un montant **32** à proximité d'une lice **54** et que le panneau **2** recouvre partiellement cette lice, la collerette **53** peut être complétée d'une rondelle compensatrice **55** de même épaisseur que la partie recouverte de la lice **54**. Cette rondelle assure la même fonction de réglage d'écartement que la collerette et pourrait être intégrée à l'épaisseur de cette dernière.

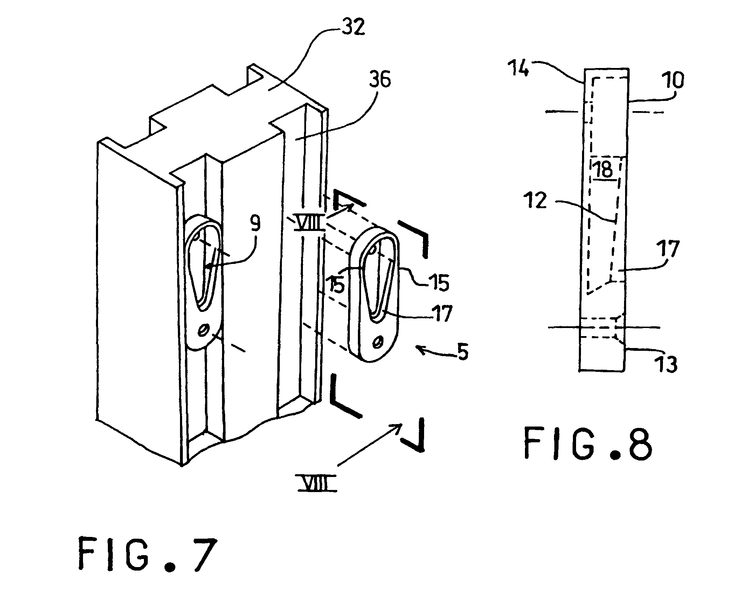

Les **fig. 7** et **8** illustrent un deuxième exemple de réalisation du contre-bouton **5**. Selon cette forme de réalisation, les branches du berceau **15** se rejoignent pour définir une section de passage **10** fermée, la face arrière **14** du berceau étant elle aussi fermée. Les moyens de fixation du contre-bouton sont alors assurés par un ou deux perçages traversants aptes à recevoir des vis. Dans une variante préférée, le contre-bouton **5** possède une forme extérieure oblongue. Cette variante de réalisation est plus particulièrement destinée à être mise en oeuvre avec des profilés **33** massifs, du type en bois ou en matière plastique, dont les saignées **36** ne présentent pas d'épaulement.

Enfin, la mise en oeuvre du dispositif d'accrochage **3** et du profilé a été décrite pour l'érection de cloisons, mais ces deux éléments peuvent également intervenir pour la constitution de divers systèmes, notamment, de rangement ou de présentation, comme par exemple des vitrines.

## Revendications

1. Système de cloison ou d'agencement intérieur, comprenant
- une structure porteuse (1),
- au moins un panneau (2) adapté sur la structure porteuse au moyen d'au moins deux dispositifs d'accrochage (3) comportant chacun :
• d'une part, un bouton (4) formé d'un corps (6) prolongé par une tête saillante (7) et pourvu de moyens d'ancrage (8),
• d'autre part, un contre-bouton (5) présentant :
■ une section de passage (10) pour la tête (7) du bouton (4),
■ un berceau (9) apte à recevoir en butée le corps (6) du bouton (4),
■ des moyens de retenue (11) de la tête (7) assurant, après engagement du corps (6), un accrochage du bouton (4) dans le contre-bouton (5),
■ des moyens de fixation (19),
**caractérisé en ce que** :
- la structure porteuse (1) est constituée par au moins deux montants (32) formés par des éléments de structure (33) présentant, sur l'une au moins de leur faces, au moins une saignée (36) ou gorge (37) en C,
- le panneau (2) est adapté sur les deux montants (32) au moyen des au moins deux dispositifs d'accrochage (3)
- le bouton (4) de chaque dispositif d'accrochage (3) est adapté sur le panneau (2), le corps (6) du bouton (4) présentant une forme cylindrique et les moyens d'ancrage (8) étant formés par un perçage apte à recevoir une vis,
- le contre-bouton (5) de chaque dispositif d'accrochage (3) est engagé dans la saignée (36) ou gorge (37) en C d'un des montants (32) et fixé sur ce montant (32) par les moyens de fixation (19),
- le bouton (4) ou le contre-bouton (5) de chaque dispositif d'accrochage (3) présente une rampe de coincement (12) guidant la tête du bouton (4), de façon à assurer un rapprochement entre le panneau (2) et la structure porteuse lors de l'engagement du bouton (4) dans le contre-bouton (5) et à plaquer le panneau (2) contre les deux montants (32).

2. Système de cloison selon la revendication 1, **caractérisé en ce que** les saignées (36) ou gorge (37) des éléments de structure (33) présentent en section droite transversale, une forme en C comportant deux épaulements (39) orientés en direction l'un de l'autre et délimitant ensemble une ouverture d'entrée de plus faible section que la gorge ou saignée, et **en ce que** le contre-bouton (5) du dispositif d'accrochage (3) comporte des moyens de fixation (19) formés par une vis de pression (19i), engagée dans un taraudage (19) traversant, apte à agir sur le fond de la saignée (36) ou gorge (37) pour bloquer le contre-bouton (5).

3. Dispositif d'accrochage pour un système de cloison selon la revendication 1 ou 2, comprenant :
• d'une part, un bouton (4) formé d'un corps (6) prolongé par une tête saillante (7) et pourvu de moyens d'ancrage (8),
• d'autre part, un contre-bouton (5) présentant :
■ une section de passage (10) pour la tête (7) du bouton,
■ un berceau (9) apte à recevoir en butée le corps (6) du bouton,
■ des moyens de retenue (11) de la tête (7) assurant, après engagement du corps (6), un accrochage du bouton (4) dans le contre-bouton (5),
■ des moyens de fixation (19),
**caractérisé en ce que** :
- le bouton (4) est destiné à être adapté sur le panneau (2), le corps (6) du bouton (4) présentant une forme cylindrique et les moyens d'ancrage (8) étant formés par un perçage apte à recevoir une vis,
- le contre-bouton (5) est apte à être engagé dans la saignée (36) ou gorge (37) en C d'un montant (32) et fixé sur le montant par les moyens de fixation (19),
- le bouton (4) ou le contre-bouton (5) présente une rampe de coincement (12) guidant la tête du bouton (4), de façon à assurer un rapprochement entre le panneau (2) et la structure porteuse (1) lors de l'engagement du bouton et un placage du panneau (2) contre les montants (32).

4. Dispositif d'accrochage selon la revendication 3 **caractérisé en ce que** le contre-bouton (5) présente un berceau (9) comportant, entre une face avant (13) et une face arrière (14), une paroi interne (16) aménagée pour délimiter :
― d'une part, la rampe de coincement (12) qui présente une inclinaison dans le sens d'un éloignement par rapport à la face avant (13) en direction du fond du berceau,
― et d'autre part, au-delà de la rampe (12) en direction de la face arrière (14), les moyens de retenue (11).

5. Dispositif d'accrochage selon la revendication 4, **caractérisé en ce que** le contre-bouton (5) présente un berceau (9) dont la paroi comporte, sur une partie au moins, à partir de la face avant (13), une surface (17) présentant une largeur augmentant de l'extrémité des branches (15) du berceau vers le fond du berceau et délimitant la rampe de coincement (12), prolongée par une surface de retenue (11) pour la tête du bouton (7).

6. Dispositif d'accrochage selon la revendication 4 ou 5,**caractérisé en ce que** le contre-bouton possède un berceau (9) présentant deux branches (15) délimitant une section de passage (10) ouverte pour la tête du bouton (7).

7. Dispositif d'accrochage selon la revendication 4 ou 5,**caractérisé en ce que** le contre-bouton possède un berceau (9) présentant deux branches (15) se rejoignant, délimitant une section de passage fermée (13) pour la tête du bouton.

8. Dispositif d'accrochage selon l'une des revendications 4 à 7, **caractérisé en ce que** le bouton possède une tête de forme tronconique convergeant vers le corps qui présente une collerette de butée pour assurer un coincement du bouton (4) dans le contre-bouton (5) et définir une profondeur d'encastrement du corps (6).

9. Dispositif d'accrochage selon les revendications 5 et 8, **caractérisé en ce que** la collerette se situe à une distance de la base de la tête inférieure à la largeur maximale de la surface (17).

10. Elément de structure pour le système de cloison selon la revendication 1, **caractérisé en ce qu'**il est constitué par un profilé rectiligne (33) présentant, sur l'une au moins de ses faces, au moins une saignée (36) ou gorge (37) en **C** adaptée pour :
o recevoir le contre-bouton (5) d'un dispositif d'accrochage selon la revendication 3,
o autoriser l'engagement du bouton (4) du dispositif d'accrochage selon la revendication 3 dans le contre-bouton (5), le bouton (4) étant adapté sur un panneau (2) du système de cloison selon la revendication 1,
o autoriser, lors de l'engagement du bouton (4) dans le contre-bouton (5), un rapprochement entre le panneau (2) et l'élément de structure (33) et un plaquement du panneau (2) contre l'élément de structure (33), le bouton (4) ou le contre-bouton (5), présentant une rampe de coincement (12) guidant la tête du bouton de façon à assurer le rapprochement entre le panneau et la structure porteuse lors de l'engagement du bouton dans le contre-bouton et à plaquer le panneau (2) contre l'élément de structure.

11. Elément de structure selon la revendication 10, **caractérisé en ce que** le profilé rectiligne (33) présente une section droite transversale rectangulaire et, sur ces deux faces dites longitudinales (34) parallèles entre-elles et à plan de symétrie de référence (P₁), au moins deux saignées symétriques (36) et opposées s'ouvrant vers l'extérieur, et sur l'une au moins des faces perpendiculaires et dites transversales (35), une gorge (37) ménagée symétriquement audit plan (Pi) et s'ouvrant vers l'extérieur, **caractérisé en ce que** chaque gorge (37) ou saignée (36) présente, en section droite transversale, une forme en C comportant deux épaulements (39) orientés en direction l'un de l'autre et délimitant ensemble une ouverture d'entrée de plus faible section que la gorge ou saignée.

12. Elément de structure selon la revendication 11, **caractérisé en ce que** chaque face longitudinale (34) présente deux saignées (36) ménagées à égale distance d'un plan transversal médian (P^) perpendiculaire au plan de symétrie de référence (Pi) et **en ce que** chaque face transversale (35) est pourvue d'une gorge (37).

13. Elément de structure selon l'une des revendications 10 à 12, **caractérisé en ce que** le profilé (33) est réalisé en une matière naturelle ou synthétique massive.

14. Elément de structure selon l'une des revendications 10 à 12, **caractérisé en ce que** le profilé (33) est réalisé par extrusion et définit au moins un caisson fermé (38) longitudinal assumant une fonction de boîte de torsion.

15. Elément de structure selon l'une des revendications 11 à 14, **caractérisé en ce que** l'une au moins des faces longitudinales (34) présente au moins une crémaillère intégrée (44).

## Patentansprüche

1. Wand- oder Innenanordnungssystem, umfassend
- einen Tragaufbau (1),
- mindestens eine Platte (2), die an den Tragaufbau mittels mindestens zweier Anhängvorrichtungen (3) angepaßt ist, die jeweils umfassen:
■ einerseits einen Knopf (4), gebildet aus einem Körper (6), der durch einen vorstehenden Kopf (7) verlängert und mit Verankerungsmitteln (8) versehen ist,
■ andererseits einen Gegenknopf (5), der aufweist:
* einen Durchgangsabschnitt (10) für den Kopf (7) des Knopfes (4),
* einen Sattel (9), der den Körper (6) des Knopfes (4) im Anschlag aufnehmen kann,
* Rückhaltemittel (11) des Kopfes (7), die nach dem Einfügen des Körpers (6) ein Anhängen des Knopfes (4) in dem Gegenknopf (5) sicherstellen,
* Befestigungsmittel (19),
**dadurch gekennzeichnet, daß**:
- der Tragaufbau (1) aus mindestens zwei Streben (32) besteht, die aus Strukturelementen (33) ausgebildet sind, die auf mindestens einer ihrer Seiten eine C-förmige Schnittfuge (36) oder Hohlkehle (37) aufweisen,
- die Platte (2) auf den zwei Streben (32) mittels der mindestens zwei Anhängvorrichtungen (3) angepaßt ist,
- der Knopf (4) jeder Anhängvorrichtung (3) auf die Platte (2) angepaßt ist, wobei der Körper (6) des Knopfes (4) eine zylindrische Form aufweist und die Verankerungsmittel (8) aus einer Bohrung ausgebildet sind, die eine Schraube aufnehmen kann,
- der Gegenknopf (5) jeder Anhängvorrichtung (3) in die C-förmige Schnittfuge (36) oder Hohlkehle (37) einer der Streben (32) eingefügt und auf dieser Strebe (32) durch die Befestigungsmittel (19) befestigt ist,
- der Knopf (4) oder der Gegenknopf (5) jeder Anhängvorrichtung (3) eine Klemmrampe (12) aufweist, die den Kopf des Knopfes (4) führt, so daß ein Annähern zwischen der Platte (2) und dem Tragaufbau beim Einfügen des Knopfes (4) in den Gegenknopf (5) und ein Anpressen der Platte (2) gegen die zwei Streben (32) sichergestellt ist.

2. Wandsystem nach Anspruch 1, **dadurch gekennzeichnet, daß** die Schnittfuge (36) oder Hohlkehle (37) der Strukturelemente (33) einen geraden Querschnitt aufweist, wobei eine C-Form zwei Ansätze (39) umfaßt, die zueinander ausgerichtet sind und gemeinsam eine Eingangsöffnung mit kleinerem Querschnitt als die Hohlkehle oder Schnittfuge abgrenzen, und daß der Gegenknopf (5) der Anhängvorrichtung (3) Befestigungsmittel (19) umfaßt, die aus einer Druckschraube (19i) bestehen, die in eine durchgehende Gewlndebohrung (19) eingefügt ist, die auf den Grund der Schnittfuge (36) oder Hohlkehle (37) einwirken kann, um den Gegenknopf (5) zu blockieren.

3. Anhängvorrichtung für ein Wandsystem nach Anspruch 1 oder 2, umfassend;
• einerseits einen Knopf (4), der aus einem Körper (6) besteht, der durch einen vorstehenden Kopf (7) verlängert und mit Verankerungsmitteln (8) versehen ist,
• andererseits einen Gegenknopf (5), der aufweist:
* einen Durchgangsquerschnitt (10) für den Kopf (7) des Knopfes,
* einen Sattel (9), der den Körper (6) des Knopfes im Anschlag aufnehmen kann,
* Rückhaltemittel (11) des Kopfes (7), die nach dem Einfügen des Körpers (6) ein Anhängen des Knopfes (4) in dem Gegenknopf (5) sicherstellen,
* Befestigungsmittel (19),
**dadurch gekennzeichnet, daß**:
- der Knopf (4) dazu bestimmt ist, auf der Platte (2) angepaßt zu werden, wobei der Körper (6) des Knopfes (4) eine zylindrische Form aufweist und die Verankerungsmittel (8) durch eine Bohrung, die eine Schraube aufnehmen kann, ausgebildet sind,
- der Gegenknopf (5) in die C-förmige Schnittfuge (36) oder Hohlkehle (37) einer Strebe (32) eingefügt und auf der Strebe mit den Befestigungsmitteln (19) befestigt werden kann,
- der Knopf (4) oder der Gegenknopf (5) eine Klemmrampe (12) aufweist, die den Kopf des Knopfes (4) führt, so daß ein Annähern zwischen der Platte (2) und dem Tragaufbau (1) beim Einfügen des Knopfes und ein Andrücken der Platte (2) gegen die Streben (32) sichergestellt ist.

4. Anhängvorrichtung nach Anspruch 3, **dadurch gekennzeichnet, daß** der Gegenknopf (5) einen Sattel (9) aufweist, der zwischen einer Vorderseite (13) und einer Rückseite (14) eine Innenwand (16) aufweist, um abzugrenzen:
- einerseits die Klemmrampe (12), die in die Richtung des Entfernens in Bezug auf die Vorderseite (13) in Richtung des Sattelbodens eine Neigung aufweist,
- und andererseits, über die Rampe (12) hinaus, in Richtung der Rückseite (14) die Rückhaltemittel (11).

5. Anhängvorrichtung nach Anspruch 4, **dadurch gekennzeichnet, daß** der Gegenknopf (5) einen Sattel (9) aufweist, dessen Wand auf mindestens einem Teil ausgehend von der Vorderseite (13) eine Fläche (17) umfaßt, die eine Breite aufweist, die von dem Ende der Arme (15) des Sattels zu dem Sattelboden zunimmt und die Klemmrampe (12) abgrenzt, die durch eine Rückhaltefläche (11) für den Kopf (7) des Knopfes verlängert ist.

6. Anhängvorrichtung nach Anspruch 4 oder 5, **dadurch gekennzeichnet, daß** der Gegenknopf (5) einen Sattel (9) besitzt, der zwei Arme (15) aufweist, die einen Durchgangsquerschnitt (10) abgrenzen, der für den Kopf (7) des Knopfes (4) geöffnet ist.

7. Anhängvorrichtung nach Anspruch 4 oder 5, **dadurch gekennzeichnet, daß** der Gegenknopf (5) einen Sattel (9) besitzt, der zwei Arme (15) aufweist, die zusammenlaufen, wobei sie einen geschlossenen Durchgangsquerschnitt (13) für den Kopf (7) des Knopfes aufweisen.

8. Anhängvorrichtung nach einem der Ansprüche 4 bis 7, **dadurch gekennzeichnet, daß** der Knopf einen Kopf in Kegelstumpfform besitzt, der zu dem Körper zusammenläuft, der einen Anschlagkragen aufweist, um ein Verklemmen des Knopfes (4) in dem Gegenknopf (5) sicherzustellen und eine Einlaßtiefe des Körpers (6) zu definieren.

9. Anhängvorrichtung nach Anspruch 5 und 8, **dadurch gekennzeichnet, daß** sich der Kragen in einer Entfernung von der Basis des Kopfes befindet, die kleiner ist als die maximale Breite der Fläche (17).

10. Strukturelement für das Wandsystem nach Anspruch 1, **dadurch gekennzeichnet, daß** es aus einem geradlinigen Profil (33) besteht, das auf mindestens einer seiner Seiten mindestens eine C-förmige Schnittfuge (36) oder Hohlkehle (37) aufweist, um:
• den Gegenknopf (5) einer Anhängvorrichtung nach Anspruch 3 aufzunehmen,
• das Einfügen des Knopfes (4) der Anhängvorrichtung nach Anspruch 3 in den Gegenknopf (5) zu erlauben, wobei der Knopf (4) auf einer Platte (2) des Wandsystems nach Anspruch 1 angepaßt ist,
• beim Einfügen des Knopfes (4) in den Gegenknopf (5) ein Annähern zwischen der Platte (2) und dem Strukturelement (33) und ein Andrücken der Platte (2) gegen das Strukturelement (33) zu gestatten, wobei der Knopf (4) oder der Gegenknopf (5) eine Klemmrampe (12) aufweist, die den Kopf des Knopfes so führt, daß das Annähern zwischen der Platte und dem Tragaufbau beim Einfügen des Knopfes in den Gegenknopf und das Andrücken der Platte (2) gegen das Strukturelement gewährleistet sind.

11. Strukturelement nach Anspruch 10, **dadurch gekennzeichnet, daß** das geradlinige Profil (33) einen geraden rechteckigen Querschnitt aufweist und auf den zwei so genannten Längsseiten (34), die zueinander parallel sind und eine Referenzsymmetrieebene (PI) haben, mindestens zwei symmetrische und entgegengesetzte Schnittfugen (36), die sich nach außen öffnen, und auf mindestens einer der senkrechten und quer genannten Seiten (35) eine Hohlkehle (37), die symmetrisch zu der Ebene (Pi) eingerichtet ist und sich nach außen öffnet, **dadurch gekennzeichnet, daß** jede Hohlkehle (37) oder Schnittfuge (36) im geraden Querschnitt eine C-Form aufweist, die zwei Ansätze (39) umfaßt, die zueinander ausgerichtet sind und gemeinsam eine Eingangsöffnung mit geringerem Querschnitt als die Hohlkehle oder Schnittfuge abgrenzen.

12. Strukturelement nach Anspruch 11, **dadurch gekennzeichnet, daß** jede Längsseite (34) zwei Schnittfugen (36) aufweist, die in gleichem Abstand von einer mittleren Querebene (P^) senkrecht zu der Referenzsymmetrieebene (Pᵢ) eingerichtet sind, und daß jede Querselte (35) mit einer Hohlkehle (37) versehen ist.

13. Strukturelement nach einem der Ansprüche 10 bis 12, **dadurch gekennzeichnet, daß** das Profil (33) aus einem massiven natürlichen oder synthetischen Werkstoff besteht.

14. Strukturelement nach einem der Ansprüche 10 bis 12, **dadurch gekennzeichnet, daß** das Profil (33) durch Extrusion hergestellt ist und mindestens einen geschlossenen Längskasten (38) definiert, der eine Torsionsgehäusefunktion erfüllt.

15. Strukturelement nach einem der Ansprüche 11 bis 14, **dadurch gekennzeichnet, daß** mindestens eine der Längsseiten (34) mindestens eine eingebaute Zahnstange (44) aufweist.

## Claims

1. Interior arrangement or partition system, comprising
- a bearing structure (1),
- at least one panel (2) fitted on the bearing structure by means of at least two fastener devices (3) each including:
■ a knob (4) formed with a body (6) extended by a protruding head (7) and provided with anchoring means (B), on the one hand,
■ a counter-knob (5) on the other hand, having:
• a passage section (10) for letting through the head (7) of the knob (4),
• a cradle (9) capable of receiving the body (6) of the knob (4) in abutment,
• means (11) for retaining the head (7) providing, after engagement of the body (6), fastening of the knob (4) in the counter-knob (5),
• attachment means (19),
**characterized in that**:
- the bearing structure (1) consists of at least two uprights (32) formed with structural members (33) having, on at least one of their faces, at least one cut (36) or groove (37) at C,
- the panel (2) is fitted onto both uprights (32) by means of said at least two fastener devices (3)
- the knob (4) of each fastener device (3) is fitted onto the panel (2), the body (6) of the knob (4) having a cylindrical shape and the anchoring means (8) being formed by a bore capable of receiving a screw,
- the counter-knob (5) of each fastener device (3) is engaged into the cut (36) or groove (37) at C of one of the uprights (32) and attached onto this upright (32) by attachment means (19),
- the knob (4) or the counter-knob (5) of each fastener device (3) has a jamming ramp (12) guiding the head of the knob (4) so as to ensure that the panel (2) and the bearing structure are brought closer during the engagement of the knob (4) in the counter-knob (5) and the panel (2) is pressed against both uprights (32).

2. The partition system according to claim 1, **characterized in that** the cuts (36) or grooves (37) of the structural members (33) have a C-shape in cross-section, including two shoulders (39) turned towards each other and delimiting together an inlet port with a smaller section than the groove or cut, and **in that** the counter-knob (5) of the fastener device (3) includes attachment means (19) formed with a set screw (19i), engaged in a tapped through-thread (19), capable of acting on the bottom of the cut (36) or groove (37) in order to block the counter-knob (5).

3. A fastener device for a partition system according to claim 1 or 2, comprising:
■ a knob (4) formed with a body (6) extended by a protruding head (7) and provided with anchoring means (8), on the one hand,
■ a counter-knob (5) on the other hand, having:
• a passage section (10) for letting through the head (7) of the knob (4),
• a cradle (9) capable of receiving the body (6) of the knob (4) in abutment,
• means (11) for retaining the head (7) providing, after engagement of the body (6), a fastening of the knob (4) in the counter-knob (5),
• attachment means (19),
**characterized in that**:
- the knob (4) is intended to be fitted onto the panel (2), the body (6) of the knob (4) having a cylindrical shape and anchoring means (8) being formed by a bore capable of receiving a screw,
- the counter-knob (5) is capable of being engaged in the cut (36) or the groove (37) at C of an upright (32) and attached onto the upright by the attachment means (19),
- the knob (4) or the counter-knob (5) has a jamming ramp (12) guiding the head of the knob (4) in order to ensure that the panel (2) and the bearing structure (1) are brought closer during the engagement of the knob and the panel (2) is pressed against the uprights (32).

4. The fastener device according to claim 3, **characterized in that** the counter-knob (5) has a cradle (9) including, between a front face (13) and a rear face (14), an internal wall (16) arrangement in order to delimit:
- the jamming ramp (12) which has an inclination in the direction away from the front face (13) towards the bottom of the cradle, on the one hand,
- and, beyond the ramp (12) towards the rear face (14), the retaining means (11), on the other hand.

5. The fastener device according to claim 4, **characterized in that** the counter-knob (5) has a cradle (9) the wall of which includes, on at least one portion, from the front face (13), a surface (17) having a width which increases from the end of the branches (15) of the cradle towards the bottom of the cradle delimiting the jamming ramp (12), extended by a retaining surface (11) for the head of the knob (7).

6. The fastener device according to claim 4 or 5, **characterized in that** the counter-knob has a cradle (9) having two branches (15) which delimit an open passage section (10) for the head of the knob (7).

7. The fastener device according to claim 4 or 5, **characterized in that** the counter-knob has a cradle (9) having two branches (15) which join together, delimiting a closed passage section (13) for the head of the knob.

8. The fastener device according to any of claims 4 to 7, **characterized in that** the knob has a frustro-conical-shaped head converging towards the body which has an abutment flange to ensure jamming of the knob (4) in the counter-knob (5) and defining a depth for fitting in the body (6).

9. The fastener device according to claims 5 and 8, **characterized in that** the flange is located at a distance from the base of the head, less than the maximum width of the surface (17).

10. A structural member for the partition system according to claim 1, **characterized in that** it consists of a rectilinear profiled part (33) having, on at least one of its faces, at least a cut (36) or groove (37) at C fitted for:
o receiving the counter-knob (5) of a fastener device according to claim 3,
o allowing engagement of the knob (4) of the fastener device according to claim 3 into the counter-knob (5), the knob (4) being fitted onto a panel (2) of the partition system according to claim 1,
o authorizing, during the engagement of the knob (4) into the counter-knob (5), that the panel (2) and the structural member (33) are brought closer to each other and the panel (2) is pressed against the structural member (33), the knob (4) or the counter-knob (5) having a jamming ramp (12) guiding the head of the knob in order to ensure that the panel and the bearing structure are brought closer during the engagement of the knob into the counter-knob and the panel (2) is pressed against the structural member.

11. The structural member according to claim 10, **characterized in that** the rectilinear profiled part (33) has a rectangular cross-section and on both of these so-called longitudinal faces (34), parallel to each other and with a reference symmetry plane (P₁), at least two symmetrical and opposite cuts (36) opening outwards, and on at least one of the perpendicular and so-called transverse faces (35), a groove (37) provided symmetrically to said plane (Pᵢ) and opening outwards, **characterized in that** each groove (37) or cut (36) has in a transverse cross-section, a C-shape including two shoulders (39) turned towards each other and delimiting together an inlet port with a smaller section than the cut or groove.

12. The structural member according to claim 11, **characterized in that** each longitudinal face (34) has two cuts (36) provided at equal distance from a middle transverse plane (P^) perpendicular to the reference symmetry plane (Pᵢ), and **in that** each transverse face (35) is provided with a groove (37).

13. The structural member according to any of claims 10 to 12, **characterized in that** the profiled part (33) is made in a natural or synthetic bulk material.

14. The structural member according to any of claims 10 to 12, **characterized in that** the profiled part (33) is made by extrusion and defines at least one longitudinal closed box (38) assuming a torsion box function.

15. The structural member according to any of claims 11 to 14, **characterized in that** at least one of the longitudinal faces (34) has at least one integrated rack (44).
